# EUROPEAN PATENT APPLICATION

(11) **EP 2 887 434 A1**
(43) Date of publication of application: **24.06.2015**
(21) Application number: 13199271.1
(22) Date of filing: 23.12.2013
(51) Int. Cl.: H01M 4/60, H01M 4/62, H01M 10/052

(54) **Electrodes for energy storage devices**

(71) Applicant: Solvay SA, 1120 Bruxelles (BE)
(72) Inventor: Martin, Roland, 1932 St-Stevens-Woluwe (BE)
(74) Representative: Vande Gucht, Anne

(57) **Abstract**

The present invention relates to a material for an energy storage device and the use of said material in organic electrodes. Additionally the invention relates to compounds and polymers comprised within said material and to devices for storage of electric energy which use organic electrodes according to the invention.

## Description

### Technical field

The present invention relates to a material for an energy storage device and the use of said material in electrodes of energy storage systems.

### Background art

One of the main challenges of renewable and sustainable energy technologies is the efficient storage of energy. Lithium-ion batteries are especially interesting if a high energy density is required. They are used in mobile phones, laptops, tablets, digital cameras, electric vehicles, hybrid vehicles and many more applications.

A rechargeable or so-called secondary lithium-ion battery comprises electrodes into which lithium ions can reversibly intercalate and deintercalate. During discharge of the battery these ions are removed from the negative electrode ("anode") material and are intercalated into the positive electrode ("cathode"). During the charge of the battery the processes are reversed. Lithium-ion capacitors use similar electrodes. It has been a focus of research in the past 30 years to develop new intercalation compounds for such electrodes. Current cathodes usually comprise intercalating inorganic materials such as LiCoO₂, LiFePO₄ and LiNiO₂.

The field of organic intercalation materials is now at the forefront of research as they have several advantages compared to conventional electrode materials. Theoretical capacity is high and production costs are low. Especially of cobalt, one of the most used elements in lithium-ion batteries, only a limited amount is available. Organic compositions usually do not require any scarce elements. Another advantage is the practically infinite amount of potentially usable organic cathode materials due to the structural diversity of carbon.

In spite of these advantages and a huge effort from research scientists all over the world inorganic electrode materials are still used in most applications. One of the main problems is to discover stable materials which have a reasonably high volumetric energy density. Another problem is a high capacity loss of organic lithium ion batteries, due to dissolution of organic intercalating materials from the electrode. A third problem is often a low conductivity of organic materials.

A focus of research regarding such organic intercalating materials has been on carbonyl compounds. In 1997 Armand et al. have shown that polyoxocyclohexanes such as Li₂C₆O₆ can insert lithium ions (cf. WO9928984). These compounds decompose in air and the cycle life is very poor due to a high solubility in the electrolyte (Armand et al., ChemSusChem 2008, 1, 348-355 and J. Am. Chem. Soc. 2009, 131, 8984-8988).

These disadvantages have inspired T. Le Gall et al. to design a polymer that has carbonyl functions which can be reduced and intercalates lithium ions (T. Le Gall et al., J. of Power Sources 2003, 119-121, 316-320). Due to the low solubility of this polymer a better cyclability was achieved. The measured specific capacity was 150 mAh/g between 1.8 and 3.8 V which corresponds to a similar gravimetric energy density as conventional inorganic intercalating materials. However, a competitive volumetric energy density requires a significantly higher specific capacity. Another problem was the low conductivity of this polymer. The reaction equation of this intercalation is shown below.

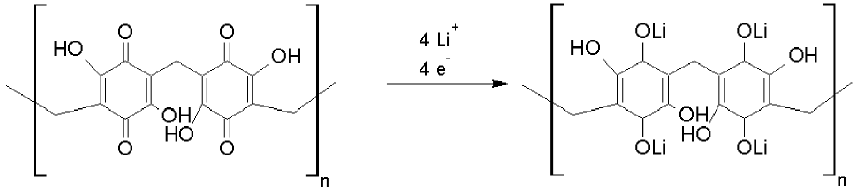

Another polymer which uses carbonyl functions as redox active lithium acceptors is disclosed in US 2013/0004836 A1 and in T. Nokami et al., J. Am. Chem. Soc. 2012, 134, 19694-19700. In this case structures having a pyrene core with four carbonyl functions are employed. They are disclosed as monomeric species or as repeating units within a copolymer chain or as substituents in a polymer chain.

There are many other electrode materials containing carbonyl functions that have been researched. A review of this research field is given in Z. Song et al., Energy Environ. Sci. 2013, 6, 2280-2301 and in Y. Liang et al., Adv. Energy Mater. 2012, 2, 742-769.

The synthesis of phenazine 1,2,3,4-tetrones having the following structure with R = H, CH₃, COOH or Cl 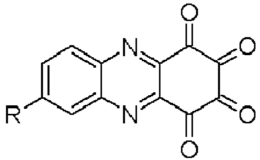 has been disclosed.

A similar molecule with two adjacent methyl groups was disclosed, too (S. Skujins and G. A. Webb, Tetrahedron 1969, 25, 3935-3945). No specific use for the compounds is disclosed by the authors.

### Problems to be solved

There is a need for electrodes comprising an organic intercalating material which have a sufficiently high energy density. Such electrodes could present an alternative to inorganic batteries.

As mentioned above, such electrodes also have to meet additional requirements regarding cyclability. The low cyclability of most conventional organic materials shortens battery lifetime significantly.

A third requirement would be a sufficiently high conductivity.

### Object of the present invention

It was thus an object of the present invention to provide electrodes which are based on materials with, simultaneously, high charge capacity and high operating voltage, enabling high energy density and improved properties regarding cyclability and conductivity.

The object is achieved by electrodes according to claim 1.

A second object was to provide an energy storage device according to claim 5 comprising electrodes according to claim 1. Such a device benefits from improved properties of electrodes according to the invention.

Another object was to provide compounds and polymers according to claim 6 and 9 which are suitable components of materials for electrodes according to claim 1.

Preferred embodiments of electrodes, devices, compounds and polymers according to the invention are described in the dependent claims and in the detailed description hereinafter.

### Detailed description of the invention

The present invention relates to electrodes for energy storage devices. Such electrodes comprise at least one compound which is represented by any of the formulas (1) to (3) or at least one polymer comprising or consisting of monomeric subunits which are represented by the formulas (1) to (3) 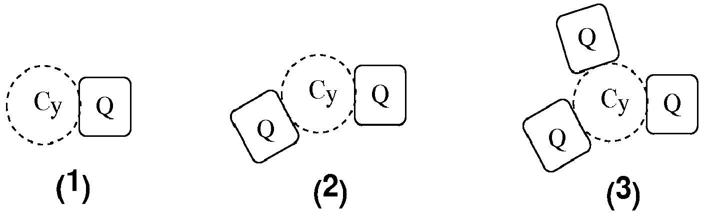 and wherein
- Cy is a 5- or 6-membered conjugated organic ring or a combination of two or more fused 5- or 6-membered conjugated organic rings,
   o which is fused through two carbon atoms to the nitrogen atoms of each Q-unit and
   o which optionally comprises O, S, Se or N atoms and may be substituted or unsubstituted,
- Q is, the same or different at each occurrence, represented by the 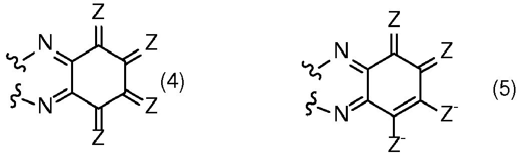 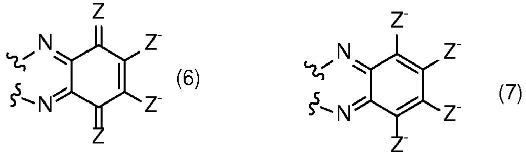
formulas (4) to (7), wherein Z is independently selected from O, N-CN and C(CN)₂,

- wherein, in formulas (5) to (7) cations independently selected from the group consisting of protons, alkaline metal cations, alkaline earth metal cations, transition metal and rare earth cations, organometallic cations and organic cations are present to ensure that the net charge of the compounds or monomeric subunits is zero or is essentially zero.

The term "polymer" is intended to cover copolymers as well as homopolymers. Both are preferred variations of polymers.

A "conjugated organic ring" implies that at least one conjugated bond is comprised within the ring system. "Organic" implies that at least one C-H bond is part of the system. All aromatic systems are conjugated systems and a well know organic aromatic system would be benzene. Conjugated organic ring systems which are not aromatic are also known and one example would be 1,3-cyclohexadiene.

The term "substituted" as used herein indicates that the corresponding substituted group has a substituent which is covalently bound by one bond. A substituted group is derived from the corresponding unsubstituted group by replacing at least one hydrogen atom with a substituent. Thus a bound hydrogen atom itself is not considered a substituent. The term "substituent group" may be used interchangeably with "substituent". A substituent may be an atom or a group of atoms. Preferably substituents are C₀-C₁₂ groups and especially preferably substituents are electron withdrawing and/or acidic C₀-C₆ groups. Acidic corresponds to a pKₛ < 5. Electron withdrawing groups herein have higher atom or group electronegativity than hydrogen. In most cases a person skilled in the art will not have to calculate said electronegativities as there is usually no doubt about which group is electron withdrawing. If indeed group electronegativity is very close to hydrogen, a calculation of group electronegativity using density-functional theory is to be conducted.

Preferred examples of substituents include fluorine atoms, chlorine atoms, cyano groups, C(CN)₂-groups, nitro groups, fluorinated alkyl groups, heteroaryl groups, sulfonyl groups, sulfonic acid groups, acyl groups, carboxylic acid groups, carboxylic anhydride groups, carboxylic amide groups and carboxylic imide groups.

The term "heteroaryl" as used herein is an aryl group in which at least one CH₂-group, CH-group or carbon atom has been replaced by at least one heteroatom or by a group in such a way that a heteroatom replaces the removed carbon. If all carbon atoms are replaced the resulting group is not considered a heteroaryl group. Heteroaryl groups according to the invention are shown below. Fused bicyclic systems of one of the groups as shown below and pyridine or benzene are preferred heteroaryl groups, too.

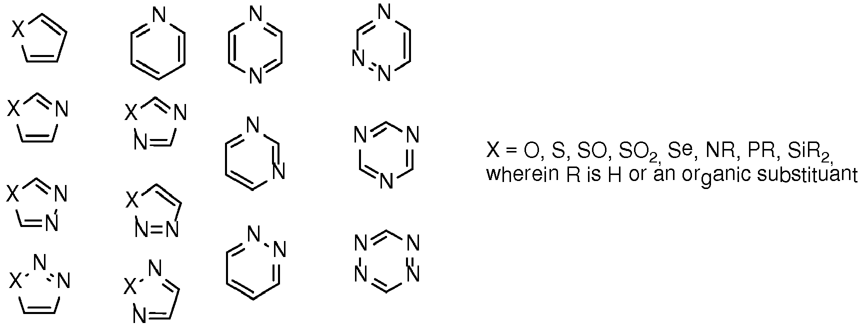

Examples of heteroaryl moieties according to the invention include furan, benzofuran, isobenzofuran, pyrrole, indole, isoindole, thiophene, benzothiophene, imidazole, benzimidazole, purine, pyrazole, indazole, oxazole, benzoxazole, benzisoxazole, thiazole, benzothiazole, pyridine, quinoline, isoquinoline, pyrazine, quinoxaline, acridine, pyrimidine, quinazoline, pyridazine, cinnoline, phthalazine, 1,2,3-triazine, 1,2,4-triazine, 1,3,5-triazine and 1,2,4,5-tetrazine. The position of chemical bond(s) of these moieties to any other molecules is (are) not indicated; such chemical bonds can replace any hydrogen within the heteroaryl structures shown. Preferably heteroaryl moieties comprise only one or two heteroatoms within a single cycle or a bicyclic system.

Preferred are heteroaryl moieties, wherein the chemical bond replaces a hydrogen that has a ¹H-NMR-Shift higher than (downfield of) 7.4 ppm.

An alkyl group may be linear or branched. Common alkyl groups include methyl, ethyl, n-propyl, iso-propyl, n-butyl, sec-butyl, iso-butyl, tert-butyl, n-pentyl, sec-pentyl, 3-pentyl, 2-methylbutyl, 3-methylbutyl, 3-methylbut-2-yl, 2-methylbut-2-yl, neo-pentyl, n-hexyl, 2-hexyl; 3-hexyl, 2-methylpentyl, 3-methylpentyl, iso-hexyl, 1,1-dimethylbutyl, 1,2-dimethylbutyl, 1,3-dimethylbutyl, 2,2-dimethylbutyl, 2,3-dimethylbutyl, 2-ethylbutyl, neo-hexyl, 1,1,2-trimethylpropyl, 1,2,2-trimethylpropyl, 1-ethyl-1-methylpropyl, 1-ethyl-2-methylpropyl, heptyl, octyl, nonyl, decyl, undecyl and dodecyl.

Preferred are fluorinated alkyl groups, wherein the chemical bond between said fluorinated alkyl group and the remaining part of the molecule is connected to a fluorinated carbon within the fluorinated alkyl group. "Fluorinated" herein is to be understood as substituted with fluorine.

In one embodiment of electrodes according to the invention Z is preferably N-CN and in a second embodiment Z is preferably C(CN)₂. Especially preferred Z is O.

In one preferred embodiment the electrode according to claim 1 comprises only Q-units according to formula (4) and thus no cations are needed. Such a preferred embodiment could be a version as sold commercially prior to intercalation of any metals.

Preferably electrodes according to the invention comprise at least one carbon-based high-surface additive, preferably graphene, to increase conductivity. Preferably less than 20%w, especially preferably less than 10%w, of carbon-based high-surface additives is added. Without being bound to any theory, it is believed that graphene connects well through self-adsorption by π-π-interactions with the conjugated charge carrier and thus no destruction of sp²-centers due to covalent functionalization is necessary. Efficient π-π-stacking is believed to be at least partially responsible for a high conductivity, improved cycle rate and lifetime. High-surface additives with a surface >200 m²/g are preferred.

Cations as described above are preferably independently selected from the group 1 and 2 in the periodic table and particularly preferably are lithium or sodium ions.

It has been stated that the net charge of the compounds or monomeric subunits can be essentially zero. This is meant to be understood in such a way, that the compounds within the electrode in their totality essentially are not charged. A person skilled in the art will understand that the term "essentially" reflects the fact that it would not be possible to sustain an absolute neutral state of charge, especially not within an electrode under working conditions. The above mentioned net charge shall not preclude any redox potentials or redox reactions within the electrode.

Compounds and polymers as specified within claims 6 to 15 and as detailed within the description represent preferred components of electrodes according to claim 1. They are non-exclusive components of electrode materials and other additives and components may be added.

Preferably polymers and compounds as described in claim 1 and if present carbon-based high-surface additives according to claim 3 are the main components of intercalating materials within the electrode. Especially preferably polymers and compounds as described in claim 1 are largely responsible for the intercalation of cations, preferably lithium or sodium, and if they are removed intercalation capacities of said electrodes are reduced by more than 60% (if working conditions as specified and suitable for the electrode are applied).

The present invention also relates to devices for storage of electric energy comprising at least one electrode according to the invention. Preferred are organic capacitors and batteries, particularly preferably secondary batteries. Especially preferred are also high capacity lithium ion batteries.

Preferred uses of said storage of electric energy include, but are not limited to electric vehicles and hybrid vehicles. Additionally included and especially preferred are any mobile devices, such as smart phones, mobile phones, laptops, tablets, digital cameras, if the comprise an energy source. Particularly preferred are any applications in which inorganic lithium ion batteries are applied up to now and thus a replacement with organic lithium ion batteries is self-evident.

The present invention also relates to compounds in accordance with one of the formulas (8) to (15) 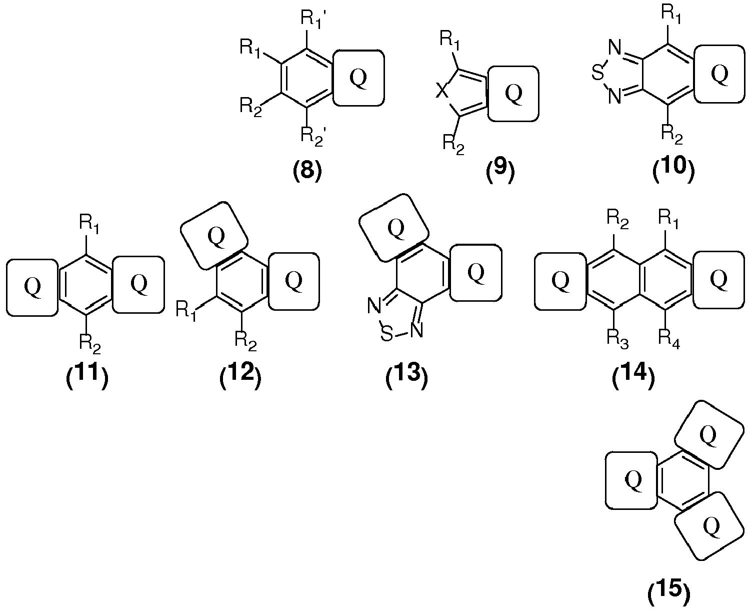 and wherein
- R₁, R₂, R₂', R₃ and R₄ are independently selected from a hydrogen atom or a substituent group or atom,
- R₁' is an electron withdrawing substituent selected from a fluorine atom, chlorine atom, cyano group, C(CN)₂-group, nitro group, fluorinated alkyl group, heteroaryl group, sulfonyl group, sulfonic acid group, acyl group, carboxylic acid group, carboxylic anhydride group, amide group, ester group or carboxylic imide group,
- X is S, SO, SO₂ or O.

Preferred embodiments of acyl groups, carboxylic imide groups, carboxylic acid groups, ester groups, sulfonyl groups and amide groups are represented by the respective formulas as given below. R' may be H or any organic group and preferably is selected from heteroaryl, aryl, alkenyl, substituted alkyl and especially preferably is an alkyl group. Preferably R' is a C₁-C₆ group or a hydrogen.

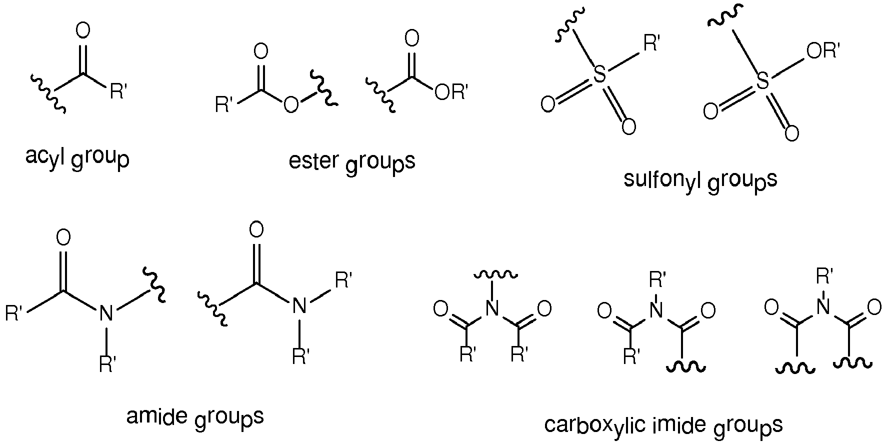

Preferred are synthetic intermediates in accordance with one of the formulas (8) to (15) in which at least one of R₁, R₂, R₂', R₃, R₄, is a functional group which can be used in a palladium catalyzed coupling reaction. Preferred are groups or atoms such as bromine atoms, iodine atoms, organotin groups or boronic ester groups, which can for example be used within a Stille or a Suzuki coupling.

Electron withdrawing groups R₁, R₂, R₂', R₃ and R₄ are preferred as they increase the discharge potential. Groups R₁, R₂, R₂', R₃ and R₄ that are precursors to an ionic species, such as sulfonic acid or carboxylic acid which are the precursor to a sulfonate or carboxylate ion, are preferred. Preferred are specifically compounds in accordance with one of the formulas (8) to (15) in which at least one of R₁, R₂, R₂', R₃ and R₄ is a fluorine atom, chlorine atom, cyano group, C(CN)₂-group, nitro group, fluorinated alkyl group, heteroaryl, sulfonyl group, sulfonic acid group, acyl group, carboxylic acid group, carboxylic anhydride group or amide group. If compounds with such groups are used in positive electrodes (cathodes) according to claim 1, discharge potential and/or ion conductivity of said electrode is increased.

Preferred are also polymers which comprise or consist of at least one species of monomeric subunits according to one of the formulas (1) to (3).

Especially preferred are polymers comprising or consisting of a monomeric species according to one of the formulas (1) to (3), wherein that the at least one species of repeating monomeric subunits is represented by one of the formulas (16) to (21) 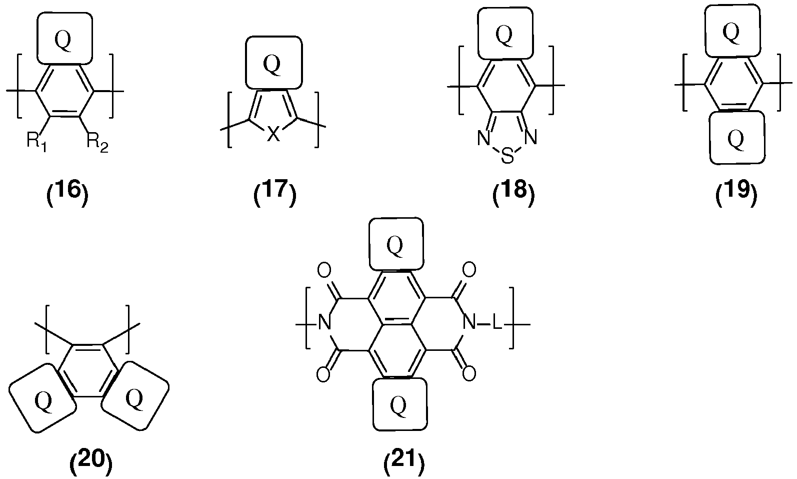 and wherein L is a linking group or a chemical bond.

Also preferred are polymers comprising or consisting of a monomeric species according to one of the formulas (1) to (3), wherein that the at least one species of repeating monomeric subunits is derived from formula (13) or (14). A compound according to claim 1 and derived from formula (21) is preferred, too.

Preferred are polymers which comprise conjugated bonds along the polymer chain. Especially preferred are such polymers if said conjugated system extends over a larger section of the polymer chain, preferably the whole polymer chain.

Particularly preferred are polymers with attached substituents according the formulas (8) to (14), wherein R₁ or R₁' is L as defined hereinbefore. Preferred polymers additionally comprise or consist of subunits according to claim 12 and may replace polymers in electrodes according to claim 1.

The linking group L may be a chemical bond or any organic group. A person skilled in the art is aware of common groups used as linkers within polymers. Preferred groups for L are C₂-C₂₀ alkylene and oligooxyalkylene which may be optionally fluorinated.

Preferably polymers comprise a monomeric species according to one of the formulas (1) to (3) and (16) to (21) and at least one second species of repeating monomeric subunits derived from thiophene or furan derivatives. These subunits differ from the monomeric subunits represented by any of the preceding formulas. Preferably they do not comprise a Q-unit.

Especially preferably the second species is represented by at least one of the formulas (22) to (27) 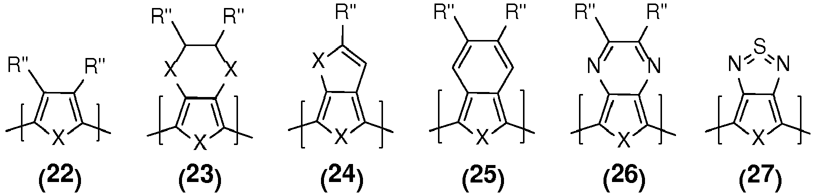 wherein
- X is O or S,
- R" is a hydrogen or a substituent

Preferably R" is a hydrogen atom or a substituent group selected from alkyl, oxoalkyl, thioalkyl, or oligooxyalkylene which may be substituted or unsubstituted.

An oxoalkyl group is an alkyl group in which a methylene group has been replaced by a carbonyl group. A thioalkyl is defined accordingly with an sulphur instead of an oxygen atom. An oligooxyalkylene group is a - [O(CH₂)ₙ]ₘ-H-group with n = 1- 20 and m = 1-20 and wherein H may be partially or completely be replaced by F.

In a preferred embodiment of above compounds or polymers Cy is a bicyclic system.

In another preferred embodiment of above compounds or polymers Z is an oxygen atom.

In especially preferred embodiment of above compounds or polymers cations (if present) are independently selected from the group 1 and 2 in the periodic table and preferably are lithium or sodium ions.

The compounds of formulas (1) to (3) whiche are used in the electrodes in accordance with the presentinvention can be obtained based on synthetic procedures whihc have been disclosed in the prior art and which are known to the skilled person who will select the conditions based on the individual needs

By way of example two principle reaction schemes are given below:

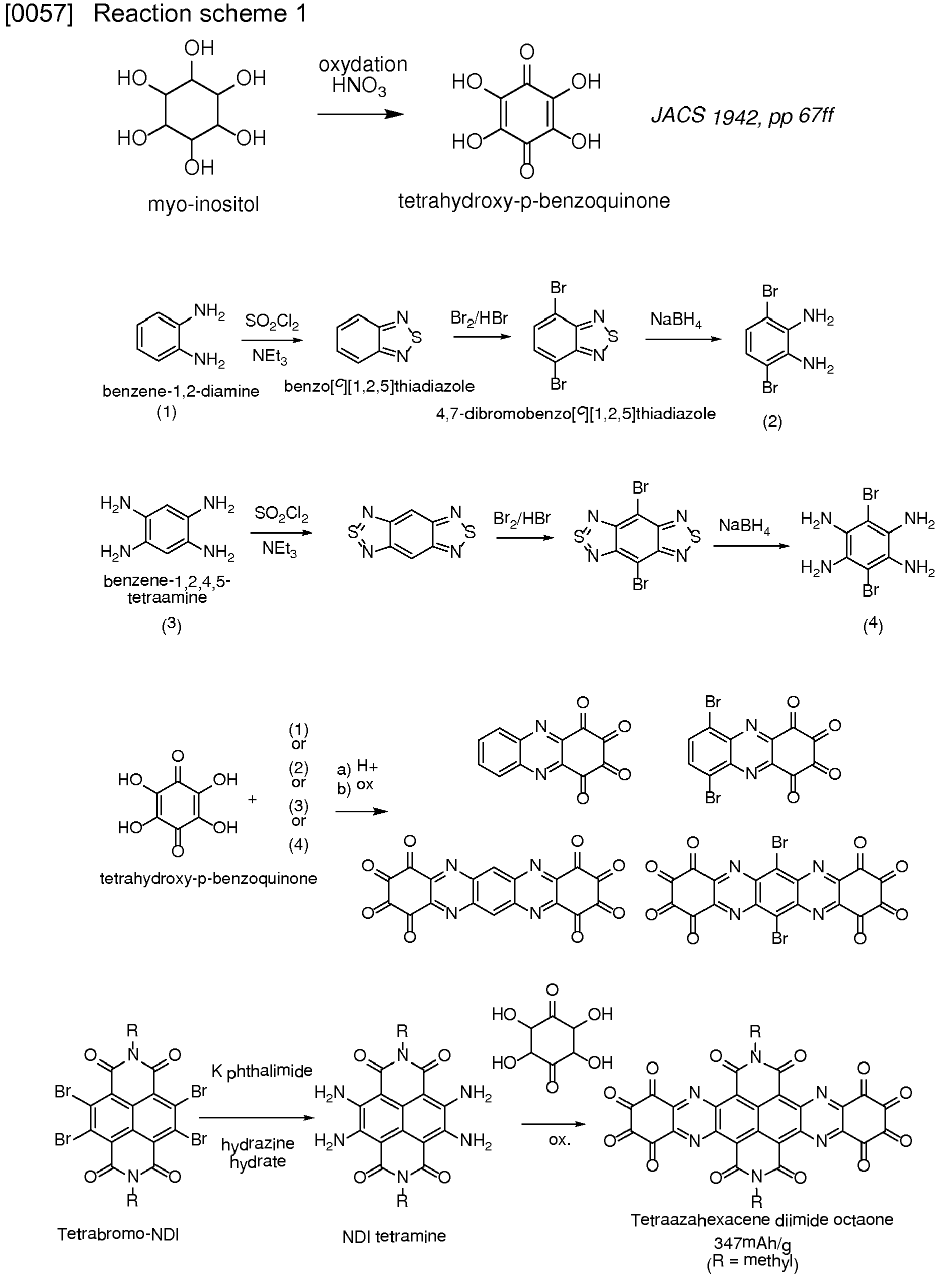

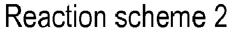

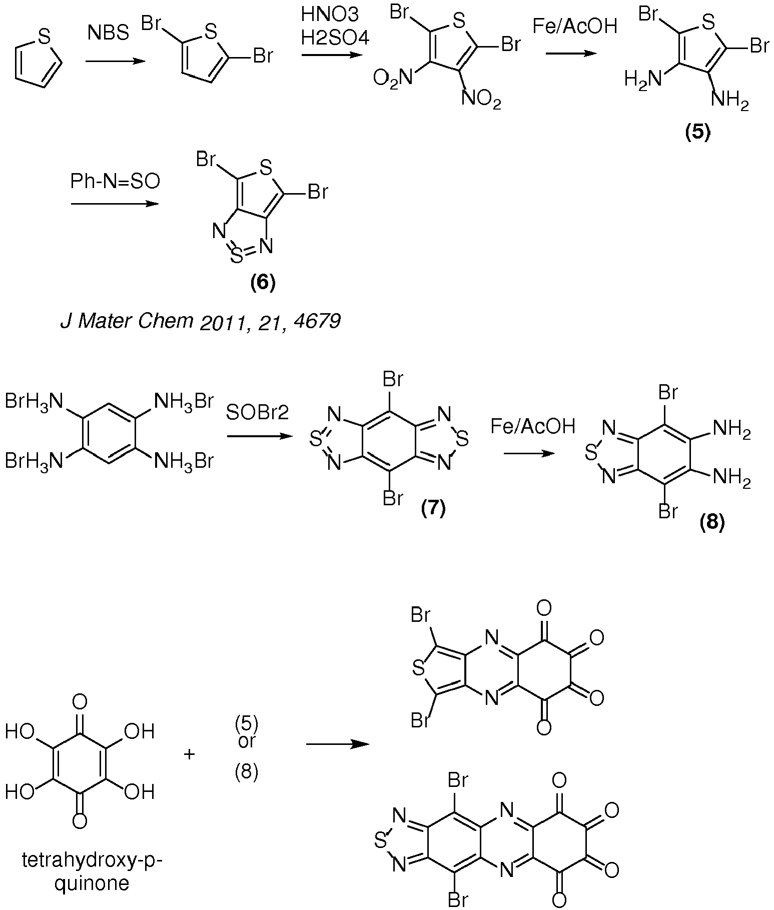

Energy densities of >= 500Wh/kg can be achieved with preferred embodiments of intercalating materials according to the invention. Electrodes based on compounds or polymers as disclosed herein, simultaneously show higher charge capacity and operating voltage compared to many previously reported organic systems. The presence of Q-units fused to other rings stabilized by extended conjugation within said compounds is an essential structural element to achieve such a high energy density electrodes. Cyclability and conductivity according to preferred embodiments is excellent.

## Claims

1. Electrodes for energy storage devices comprising at least one compound which is represented by any of the formulas (1) to (3) or at least one polymer comprising or consisting of monomeric subunits which are represented by at least one of the formulas (1) to (3) 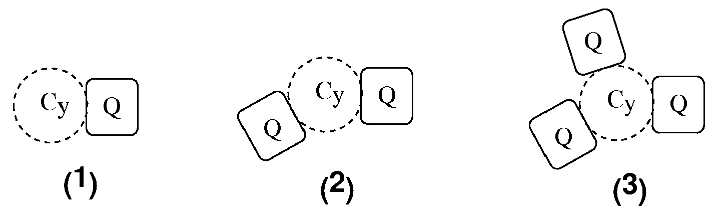 and wherein
- Cy is a 5- or 6-membered conjugated organic ring or a combination of two or more fused 5- or 6-membered conjugated organic rings,
- which is fused through two carbon atoms to the nitrogen atoms of each Q-unit and
- which optionally comprises O, S, Se or N atoms and may be substituted or unsubstituted,
- Q is, the same or different at each occurrence, represented by the formulas (4) to (7), wherein Z is independently selected from O, N-CN and C(CN)₂, 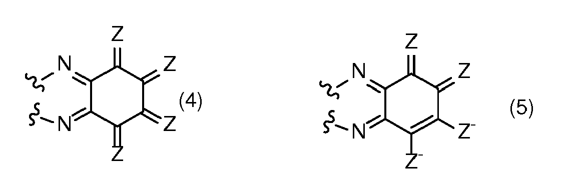 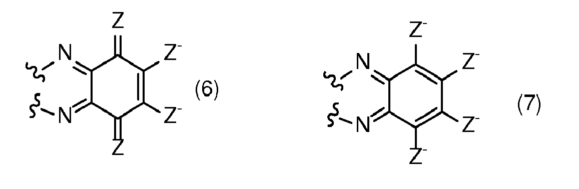
- wherein, in formulas (5) to (7) cations independently selected from the group consisting of protons, alkaline metal cations, alkaline earth metal cations, transition metal and rare earth cations, organometallic cations and organic cations are present to ensure that the net charge of the compounds or monomeric subunits is zero or is essentially zero.

2. Electrodes according to claim 1, wherein Cy is substituted by at least one fluorine atom, chlorine atom, cyano group, C(CN)₂-group, nitro group, fluorinated alkyl group, heteroaryl, sulfonyl group, sulfonic acid group, acyl group, carboxylic acid group, carboxylic anhydride group, carboxylic amide group or carboxylic imide group.

3. Electrodes according to any of the preceding claims, which comprise at least one carbon-based high-surface additive, preferably graphene.

4. Electrodes according to any of the preceding claims, wherein cations are independently selected from the group 1 and 2 in the periodic table and preferably are lithium or sodium ions.

5. Devices for storage of electric energy, preferably a secondary battery, comprising at least one electrode according to any of the preceding claims.

6. Compounds as defined in claim 1, in accordance with one of the formulas (8) to (15) 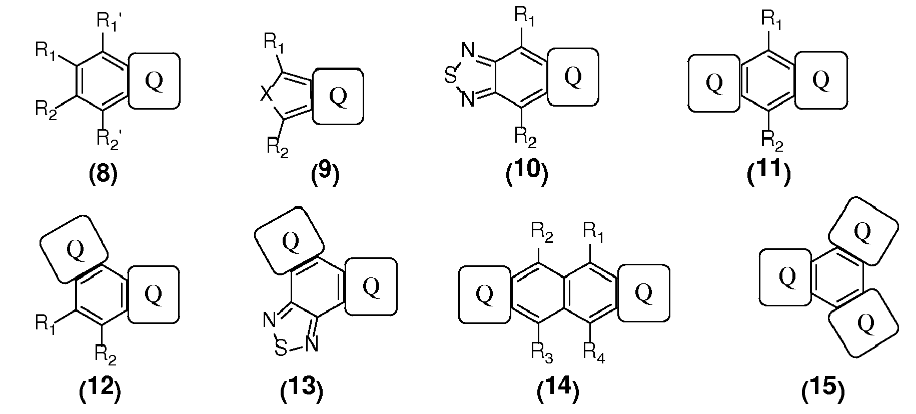 and wherein
- R₁, R₂, R₃, R₄ and R₂' are independently selected from a hydrogen atom or a substituent group or atom,
- R₁' is an electron withdrawing substituent selected from a fluorine atom, chlorine atom, cyano group, C(CN)₂-group, nitro group, fluorinated alkyl group, heteroaryl group, sulfonyl group, sulfonic acid group, acyl group, carboxylic acid group, carboxylic anhydride group or amide group, ester group or carboxylic imide group,
- X is S, SO, SO₂ or O.

7. Compounds according to claim 6, wherein at least one of R₁, R₂, R₂', R₃, R₄, is a bromine atom, iodine atom, organotin group or boronic ester group.

8. Compounds according to claim 6, wherein at least one of R₁, R₂, R₂', R₃ and R₄ is a fluorine atom, chlorine atom, cyano group, C(CN)₂-group, nitro group, fluorinated alkyl group, heteroaryl, sulfonyl group, sulfonic acid group, acyl group, carboxylic acid group, carboxylic anhydride group or amide group.

9. Polymers, comprising or consisting of at least one species of monomeric subunits as defined in claim 1.

10. Polymers according to claim 9, wherein at least one species of repeating
monomeric subunits is represented by one of the formulas (16) to (21) 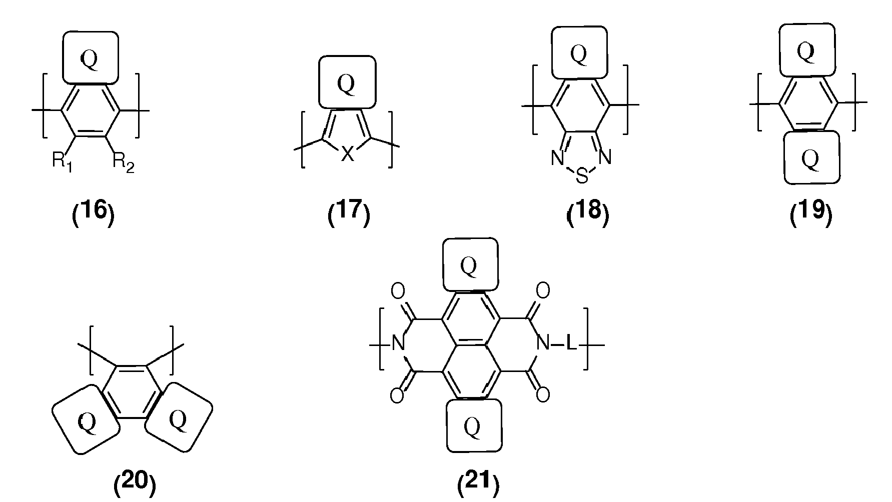 and wherein L is a linking group or a chemical bond.

11. Polymers according to claim 9 or 10, comprising at least one second species of repeating monomeric subunits derived from thiophene or furan derivatives differing from the monomeric subunits as defined in claim 10.

12. Polymers according to claim 11, wherein the second species of repeating monomeric subunits is represented by at least one of the formulas (22) to (27) 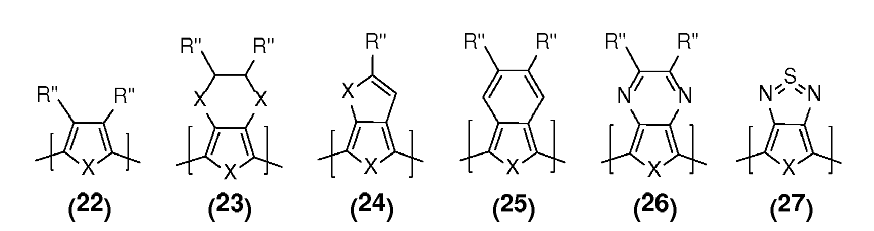 and wherein
- X is O or S,
- R" is a hydrogen or a substituent group selected from alkyl, oxoalkyl, thioalkyl, or oligooxyalkylene which may be substituted or unsubstituted.

13. Compounds according to claim 6 or polymers according to claim 9, wherein Cy is a bicyclic system.

14. Compounds according to claim 6 or polymers according to claim 9, wherein Z is an oxygen atom.

15. Compounds according to claim 6 or polymers according to claim 9, wherein cations are independently selected from the group 1 and 2 in the periodic table and preferably are lithium or sodium ions.
